# EUROPÄISCHE PATENTSCHRIFT

(11) **EP 3 555 164 B1**
(45) Veröffentlichungstag und Bekanntmachung des Hinweises auf die Patenterteilung: **02.06.2021**
(21) Anmeldenummer: 17805237.9
(22) Anmeldetag: 05.12.2017
(51) Int. Cl.: C08G 18/62, C08G 18/70, C08G 18/79, C08G 18/80, C08G 18/28

(54) **WASSEREMULGIERBARE ISOCYANATE MIT VERBESSERTEN EIGENSCHAFTEN**
WATER-EMULSIFIABLE ISOCYANATES WITH IMPROVED PROPERTIES
ISOCYANATES ÉMULSIFIABLES DANS L'EAU QUI PRÉSENTENT DES PROPRIÉTÉS AMÉLIORÉES

(30) Priorität: 14.12.2016 EP 16203923
(43) Veröffentlichungstag der Anmeldung: 23.10.2019
(73) Patentinhaber: BASF SE, 67056 Ludwigshafen am Rhein (DE)
(72) Erfinder: LUCAS, Frederic, 67056 Ludwigshafen (DE); AL-HELLANI, Rabie, 67056 Ludwigshafen (DE)
(74) Vertreter: BASF IP Association
(86) Internationale Anmeldenummer: PCT/EP2017/081519
(87) Internationale Veröffentlichungsnummer: WO 2018/108631

(56) Entgegenhaltungen:
- EP-A1- 1 530 604
- EP-A1- 2 368 926

## Beschreibung

Die Erfindung liegt insbesondere auf dem Gebiet der wasseremulgierbaren Polyisocyanate. Wasseremulgierbare Polyisocyanate werden typischerweise wässrigen Polymer-Dispersionen als Vernetzungsmittel zugesetzt und sind in der Literatur an sich vielfach beschrieben. Die Wasseremulgierbarkeit kann dadurch erreicht werden, dass man Polyisocyanate mit Emulgatoren abmischt, die durch Reaktion von Polyisocyanaten mit hydrophilen Verbindungen erhalten werden.

Die Erfindung betrifft Mischungen, die
(A) mindestens ein Polyisocyanat (a),
(B) mindestens einen Emugator, erhältlich durch Umsetzung mindestens eines Polyisocyanats mit mindestens einem Polyetheralkohol, wobei der Polyetheralkohol ein Molekulargewicht kleiner 400 g/mol aufweist,
(C) mindestens einen Emugator, erhältlich durch Umsetzung mindestens eines Polyisocyanats mit mindestens einem Polyetheralkohol, wobei der Polyetheralkohol ein Molekulargewicht größer 450 g/mol aufweist, und
(D) optional mindestens einen Emulgator, erhältlich durch Umsetzung eines Polyisocyanats mit mindestens einer Verbindung (d) mit mindestens einer hydrophilen, nicht gegenüber Isocyanat reaktiven Gruppe (Gruppe D1) und genau einer gegenüber Isocyanat reaktiven Gruppe (Gruppe D2) enthalten, wobei das Gewichtsverhältnis von Komponente (B) zu Komponente (C) von 30:70 bis 70:30, bevorzugt von 40:60 bis 60:40 beträgt.

Ferner betrifft die Erfindung wässrige Polymerdispersionen sowie Beschichtungsmassen, die diese Mischungen enthalten. Des Weiteren betrifft die Erfindung ein Verfahren zur Beschichtung von Substraten unter Verwendung solcher Mischungen als Beschichtungsmittel sowie die Verwendung der Mischungen als Beschichtungsmittel.
Bevorzugte Ausführungsformen sind der Beschreibung zu entnehmen. Kombinationen bevorzugter Ausführungsformen liegen im Rahmen dieser Erfindung.

Als hydrophile Moleküle vielfach verwendet werden nichtionische hydrophile Moleküle wie Polyalkylenoxid-Alkohole.

EP-A2 206 059 beschreibt in Wasser dispergierbare Polyisocyanatzubereitungen aus einem aliphatischen Polyisocyanat und einem Umsetzungsprodukt eines aliphatischen Polyisocyanats mit einem ein- oder mehrwertigen, nichtionischen Polyalkylenetheralkohol mit mindestens einer mindestens 10 Ethylenoxideinheiten aufweisenden Polyetherkette als Emulgator. Für geeignete Polyisocyanate werden umfangreiche Listen von aliphatischen und cycloaliphatischen Diisocyanaten angegeben, besonders bevorzugt Isocyanurate und Biurete auf Basis von 1,6-Diisocyanatohexan (HDI) und/oder Isocyanurate auf Basis von 1-Isocyanato-3,5,5-trimethyl-5-isocyanatomethyl-cyclohexan (IPDI).

EP-A1 540 985 beschreibt ebenfalls Polyisocyanatgemische, hier weisen jedoch die Polyetherketten einen mittleren Gehalt von 5,0 bis 9,9 Ethylenoxideinheiten auf.

WO2004/022623 beschreibt Polyisocyanatgemsiche enthaltend ein Isocyanurat und/oder Biuret des 1,6-Diisocyanatohexan, ein Isocyanurat des IPDI und einen Emulgator.

EP1530604 A1 und EP2368926 beschreiben jeweils Mischungen enthaltend Polyisocyanat und Emulgatoren, welche monofunktionelle PEO Ketten tragen.

Nachteilig an den beschriebenen Polyisocyanatmischungen ist, dass diese die Anforderungen, die an die Einrührbarkeit und Glanz der mit ihnen erhältlichen Beschichtungen gestellt werden, nicht erfüllen.
Wasseremulgierbare Isocyanate können zur Verbesserung der Dispergierbarkeit in organischen Lösungsmitteln wie z.B. Kohlensäureestern oder Lactonen gelöst werden, wie in der EP-A 697424 beschrieben.

Aus "Lackharze" (Ed. D. Stoye und W. Freitag, Hanser 1996,S. 195) ist bekannt, dass IPDI-Trimerisat, das Lackharzen eine vergleichsweise hohe Härte bis hin zur Sprödigkeit verleiht, häufig in Abmischungen mit HDI-Derivaten zum Einsatz kommt, um die Härte zu vermindern.

Folgende Eigenschaften eines wasseremulgierbaren Isocyanats werden vom Anwender verlangt:
1. Das Isocyanat soll einfach zu emulgieren sein; die zwingende Verwendung anspruchsvoller Apparate wie z.B. hochscherenden Rührorganen ist nicht erwünscht.
2. Die Emulsion soll feinteilig sein, da ansonsten Störungen z.B. Glanzes oder Trübungen auftreten können.
3. Bei Beschichtungen ist häufig eine hohe Endhärte erwünscht.
4. Die Endhärte soll möglichst rasch erreichtwerden.

Aufgabe der vorliegenden Erfindung war es, wasseremulgierbare Polyisocyanate zur Verfügung zu stellen, die verbesserte Emulgierbarkeitseigenschaften zeigen und mit denen gleichzeitig Beschichtungen mit hohem Glanz hergestellt werden können.

Die Aufgabe wurde gelöst durch Mischungen, enthaltend
(A) mindestens ein Polyisocyanat (a),
(B) mindestens einen Emugator, erhältlich durch Umsetzung mindestens eines Polyisocyanats mit mindestens einem Polyetheralkohol, wobei der Polyetheralkohol ein Molekulargewicht kleiner 400 g/mol aufweist und
(C) mindestens einen Emugator, erhältlich durch Umsetzung mindestens eines Polyisocyanats mit mindestens einem Polyetheralkohol, wobei der Polyetheralkohol ein Molekulargewicht größer 450 g/mol aufweist,
(D) optional mindestens einen Emulgator, erhältlich durch Umsetzung eines Polyisocyanats mit mindestens einer Verbindung (d) mit mindestens einer hydrophilen, nicht gegenüber Isocyanat reaktiven Gruppe (Gruppe D1) und genau einer gegenüber Isocyanat reaktiven Gruppe (Gruppe D2), wobei das Gewichtsverhältnis von Komponente (B) zu Komponente (C) von 30:70 bis 70:30, bevorzugt von 40:60 bis 60:40 beträgt.

Die erfindungsgemäßen Mischungen zeigen leichte Emulgierbarkeit, führen zu einer stabilen und feinteiligen Emulsion und die mit ihnen erhältlichen Beschichtungen zeigen einen hohen Glanz.

Weiterhin wurden Polymerdispersionen sowie Beschichtungsmassen, die diese Mischungen enthalten, sowie Verfahren zur Beschichtung von Substraten unter Verwendung solcher Mischungen als Beschichtungsmittel und die Verwendung der Mischungen als Beschichtungsmittel gefunden.

Bevorzugte Ausführungsformen sind der Beschreibung zu entnehmen. Kombinationen bevorzugter Ausführungsformen liegen im Rahmen dieser Erfindung.

Die Mischung enthält als Komponente (A) mindestens ein Polyisocyanat (a).
Mindestens ein Polyisocyanat bedeutet ein Polyisocyanat oder eine Mischung aus zwei oder mehr Polyisocyanaten unterschiedlicher Zusammensetzung.
Es versteht sich, dass der Ausdruck -ein Polyisocyanat- ebenfalls ein Gemisch von Polyisocyanaten umfasst, welche sich lediglich in ihrer Kettenlänge und/oder in der Anordnung der Monomere in der Polymerkette unterscheiden.

Das mindestens eine Polyisocyanat (a) kann durch Polymerisation von monomeren aromatischen, aliphatischen und/oder cycloaliphatischen Isocyanaten, bevorzugt von aliphatischen und/oder cycloaliphatischen (in dieser Schrift kurz (cyclo)aliphatische) Isocyanaten und besonders bevorzugt von aliphatischen Isocyanaten hergestellt werden.
Aromatische Isocyanate sind solche, die mindestens ein aromatisches Ringsystem enthalten, also sowohl rein aromatische wie auch araliphatische Verbindungen. Unter ersteren werden Isocyanate verstanden, bei denen die Isocyanatogruppen direkt an aromatische Ringsysteme gebunden sind, wohingegen bei letzteren die Isocyanatogruppen an Alkylengruppen gebunden sind, aber die Verbindungen auch aromatische Ringsysteme enthalten, wie es beispielsweise bei α,α,α',α'-Tetramethyl-1,3-xylylendiisocyanat (TMXDI) der Fall ist.
Cycloaliphatische Isocyanate sind solche, die mindestens ein cycloaliphatisches Ringsystem enthalten.

Aliphatische Isocyanate sind solche, die ausschließlich gerade oder verzweigte Kohlenstoffketten enthalten, also acyclische Verbindungen.
Bei den monomeren aromatischen, aliphatischen und/oder cycloaliphatischen Isocyanaten kann es sich jeweils um gleiche oder unterschiedliche Isocyanate handeln.
Bei den monomeren aromatischen, aliphatischen und/oder cycloaliphatischen Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.
Es kommen prinzipiell auch höhere Isocyanate mit im Mittel mehr als zwei Isocyanatgruppen in Betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten.

Die monomeren aromatischen, aliphatischen und/oder cycloaliphatischen Isocyanate weisen keine wesentlichen Umsetzungsprodukte der Isocyanatgruppen mit sich selbst auf.

Bei den monomeren aromatischen, aliphatischen und/oder cycloaliphatischen Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-lsocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3- (bzw. 4-), 8- (bzw. 9-)Bis(isocyanatomethyl)-tricyclo[5.2.1.02.6]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30 bis 90:10.

Dicyclohexylmethan-4,4'-diisocyanat kann ebenfalls als Gemisch der verschiedenen cis- und trans-Isomere vorliegen.

Als Diisocyanate können sowohl solche Diisocyanate eingesetzt werden, die durch Phosgenierung der korrespondierenden Amine erhalten werden, als auch solche, die ohne die Verwendung von Phosgen, d.h. nach phosgenfreien Verfahren, hergestellt werden. Nach Angaben der EP-A-126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanatomethyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Reaktionsprodukten auf, was beispielsweise in Anwendungen in der Elektronikindustrie vorteilhaft ist, ohne darauf beschränkt zu sein.

Es kann vorteilhaft sein, wenn die eingesetzten Isocyanate einen Gesamtgehalt an hydrolysierbarem Chlor von weniger als 200 ppm aufweisen, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Das mindestens eine Polyisocyanat (a), zu dem die monomeren Isocyanate polymerisiert werden können, ist in der Regel wie folgt charakterisiert:
Die mittlere NCO-Funktionalität des mindestens einen Polyisocyanats (a) beträgt in der Regel mindestens 1,8 und kann bis zu 8 betragen, beispielsweise bis zu 6, bevorzugt 2 bis 5 und besonders bevorzugt 2,4 bis 4.

Der Gehalt an Isocyanatgruppen nach der Polymerisierung, berechnet als NCO = 42 g/mol, beträgt, wenn nicht anders angegeben, in der Regel von 5 bis 30 Gew%.

Bevorzugt handelt es sich bei dem mindestens einen Polyisocyanat (a) um folgende Verbindungen:
1) Ein oder mehrere Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanatoisocyanurate und insbesondere die auf Basis von Hexamethylendiisocyanat und Isophorondiisocyanat. Bei den dabei vorliegenden Isocyanuraten handelt es sich insbesondere um Trisisocyanatoalkyl- bzw. Tris-isocyanatocycloalkylisocyanurate, welche cyclische Trimere der Diisocyanate darstellen, oder um Gemische mit ihren höheren, mehr als einen Isocyanuratring aufweisenden Homologen. Die Isocyanatoisocyanurate haben im Allgemeinen einen NCO-Gehalt von 10 bis 30 Gew.-%, insbesondere 15 bis 25 Gew.-% und eine mittlere NCO-Funktionalität von 2,6 bis 8. Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 Gew.-% bezogen auf das Polyisocyanat.
2) Ein oder mehrere Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Uretdiongruppen aufweisende Polyisocyanate werden häufig im Gemisch mit anderen Polyisocyanaten, insbesondere den unter Punkt 1) genannten, erhalten. Uretdiongruppen aufweisende Polyisocyanate weisen üblicherweise NCO-Funktionalitäten von 2 bis 3 auf.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Ein oder mehrere Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Ein oder mehrere Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5.
   Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden. Urethan- und/oder Allophanatgruppen aufweisende Polyisocyanate treten häufig in Mischformen mit den unter Punkt 1) genannten Polyisocyanaten auf.
5) Ein oder mehrere Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate könne aus Diisocyanat und Kohlendioxid zugänglich sein.
6) Ein oder mehrere Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind zum Beispiel aus Diisocyanaten mittels spezieller Katalysatoren herstellbar.
7) Ein oder mehrere Uretonimin-modifizierte Polyisocyanate.
8) Ein oder mehrere Carbodiimid-modifizierte Polyisocyanate.
9) Ein oder mehrere Hyperverzweigte Polyisocyanate, wie sie beispielsweise bekannt sind aus der DE-A 10013186 oder DE-A 10013187.
10) Die unter den vorgenannten Punkten beschriebenen Polyisocyanate 1)-9), bevorzugt 1), 2), 3), 4) und 6) können nach deren Herstellung in Biuretgruppen- oder Urethan- /Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.
11) Polyisocyanate, die neben den unter 1) bis 10) beschriebenen Gruppen noch solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Es kann vorteilhaft sein, wenn das mindestens eine Polyisocyanat (a) ausgewählt ist aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges und/oder biuretgruppenhaltiges Polyisocyanat.

Besonders bevorzugt handelt es sich bei dem mindestens einen Polyisocyanat (a) um ein Polyisocyanat auf Basis von aliphatischen oder cycloaliphatischen Diisocyanaten, ganz besonders bevorzugt auf Basis von 1,6-Hexamethylendiisocyanat oder Isophorondiisocyanat.

Des Weiteren besonders bevorzugt handelt es sich bei dem mindestens einen Polyisocyanat (a) um ein Gemisch von Polyisocyanaten, ganz besonders bevorzugt von solchen auf der Basis von 1,6-Hexamethylendiisocyanat und solchen auf der Basis von Isophorondiisocyanat.

Ganz besonders Bevorzugt handelt es sich bei dem mindestens einen Polyisocyanat (a) um mindestens ein Polyisocyanat (a1) und mindestens ein Polyisocanat (a2).

Das mindenstens eine Polyisocyanat (a1) ist ein Isocyanurat und/oder Biuret des 1,6-Diisocyanatohexans (HDI). Dies umfaßt erfindungsgemäß solche Polyisocyanate, die zu mindestens 50 Gew%, bevorzugt zu mindestens 66 Gew%, besonders bevorzugt zu mindestens 75 Gew%, ganz besonders bevorzugt zu mindestens 85 Gew% und insbesondere zu mindestens 95 Gew% Verbindungen der Formel (la) und/oder (Ib), 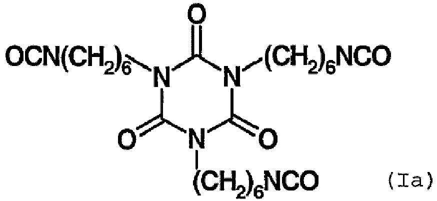 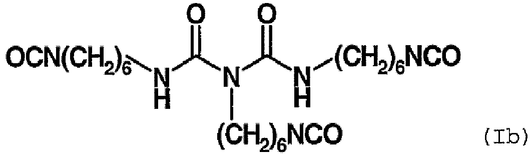 sowie deren höheren Homologen enthalten.

Die Zusammensetzung der Polyisocyanate, also beispielsweise die Anteile an Isocyanuraten und/oder Biureten und deren höheren Homologen, sowie die mittlere Funktionalität werden in dieser Schrift bestimmt durch Gelpermeationschromatographie mit Polystyrol als Standard und Tetrahydrofuran als Elutionsmittel.

Das mindestens eine Polyisocyanat (a2) ist ein Isocyanurat des 1-lsocyanato-3,5,5-tri-methyl-5-isocyanatomethyl-cyclohexan (IPDI). Dies umfaßt erfindungsgemäß solche Polyisocyanate, die zu mindestens 50 Gew%, bevorzugt zu mindestens 66 Gew%, besonders bevorzugt zu mindestens 75 Gew%, ganz besonders bevorzugt zu mindestens 85 Gew% und insbesondere zu mindestens 95 Gew% die Verbindung der Formel (II), 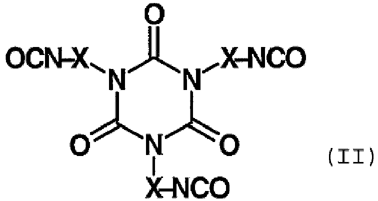 worin X für 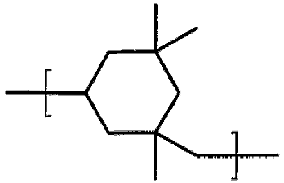 steht,
sowie deren höhere Homologen enthalten.

Das mindestens eine Polyisocyanat (a) kann beispielsweise nach Methoden hergestellt werden, die dem Fachmann bekannt sind.

Das Verfahren zur Herstellung des mindestens einen Polyisocyanats (a) kann erfolgen, wie in WO 2008/68198 beschrieben, dort besonders von Seite 20, Zeile 21 bis Seite 27, Zeile 15.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40.

Die Reaktion kann alternativ auch abgebrochen werden, wie in WO 2005/087828 von Seite 11, Zeile 12 bis Seite 12, Zeile 5 beschrieben.

In den Verfahren zur Herstellung des mindestens einen Polyisocyanats (a) können thermisch nicht-labile als auch thermisch labile Katalysatoren eingesetzt werden.

Werden in dem Verfahren zur Herstellung des mindestens einen Polyisocyanats (a) thermisch labile Katalysatoren eingesetzt, ist es weiterhin auch möglich, die Reaktion abzubrechen durch Erhitzen des Reaktionsgemischs auf eine Temperatur oberhalb von mindestens 80 °C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.
Di-, Tri- und höhere Polyisocyanate können beispielsweise durch Phosgenierung von entsprechenden Anilin/Formaldehyd-Kondensaten erhalten werden und Methylenbrücken aufweisende Polyphenylpolyisocyanate darstellen.

Die Mischung enthält als Komponente (B) mindestens einen Emugator, erhältlich durch Umsetzung mindestens eines Polyisocyanats mit mindestens einem Polyetheralkohol, wobei der Polyetheralkohol ein Molekulargewicht kleiner 400 g/mol aufweist.

Bevorzugt weißt der Polyetheralkohol in Komponente (B) ein Molekulargewicht von 200 g/mol bis 400 g/mol auf.

Die Mischung enthält als Komponente (C) mindestens einen Emugator, erhältlich durch Umsetzung mindestens eines Polyisocyanats mit mindestens einem Polyetheralkohol, wobei der Polyetheralkohol ein Molekulargewicht größer 450 g/mol aufweist.

Bevorzugt weißt der Polyetheralkohol in Komponente (C) ein Molekulargewicht von 450 g/mol bis 650 g/mol auf.

Das mindestens eine in Komponente (B) und/oder Komponente (C) verwendete Polyisocyanat kann mit dem mindestens einen Polyisocyanat (a) gleich oder von diesem verschieden sein. Bevorzugt ist das mindestens eine in Komponente (B) und/oder Komponente (C) verwendete Polyisocyanat mit dem mindestens einen Polyisocyanat (a) gleich. Bei dem mindestens einen in Komponente (B) und/oder (C) verwendeten Polyisocyanat kann es sich um jegweder Poliisocyanat handeln, bevorzugt handelt es sich um ein Polyisocyanat wie in Komponente (A) beschrieben. Besonders bevorzugt handelt es sich bei dem mindestens einen Polyisocyanat in der Komponente (B) und/oder Komponente (C) um mindestens ein Polyisocyant (a1) und/oder mindestens ein Polyisocyanat (a2).

Das Gewichtsverhältnis von Komponente (B) zu Komponente(C) beträgt von 30:70 bis 70:30, besonders bevorzugt von 40:60 bis 60:40.

Polyetheralkohole sind durch Alkoxylierung geeigneter Startermoleküle erhältlich. Geeignete Startermoleküle zur Herstellung einwertiger Polyetheralkohole sind Thiolverbindungen, Monohydroxyverbindungen der allgemeinen Formel

R¹-O-H

oder sekundäre Monoamine der allgemeinen Formel

R²R³N-H

in welchen
R¹, R² und R³ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂-C₁₈-Alkyl, C₆-C₁₂-Aryl, C₅-C₁₂-Cycioaikyi oder einen fünf- bis sechsgliedrigen, Sauerstoff-, Stickstoff- und/oder Schwefelatome aufweisenden Heterocyclus bedeuten oder R² und R³ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt ist R¹ C₁- bis C₄-Alkyl, d.h. Methyl, Ethyl, *iso*-Propyl, n-Propyl, n-Butyl, *iso*-Butyl, *sek-*Butyl oder *tert*-Butyl, besonders bevorzugt ist R¹ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, nDodeca- nol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethyl- hexyl)-amin, N-Methyl- und N-Ethylcyclohexylamin oder Dicyclohexylamin, heterocylische sekundäre Amine wie Morpholin, Pyrrolidin, Piperidin oder IH-Pyrazol, sowie Aminoalkohole wie 2-Dimethylaminoethanol, 2-Diethylaminoethanol, 2-Diisopropylaminoethanol, 2-Dibutylaminoethanoi, 3-(Dimethylamino)-1-propanol oder 1-(Dimethylamino)-2-propanol.
Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Verbindungen sind Polyetheralkohole, bei deren Herstellung gesättigte aliphatische oder cycloaliphatische Alkohole der oben genannten Art als Startermoleküle eingesetzt wurden. Ganz besonders bevorzugt sind Polyetheralkohole, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyetheralkohole.

Bevorzugte Polyetheralkohole sind somit Verbindungen der Formel

R¹-O-[-Xᵢ-]ₖ-H

worin
R¹ die oben genannten Bedeutungen hat,
k für eine ganze Zahl steht und jedes Xᵢ für i = 1 bis k unabhängig voneinander ausgewählt sein kann aus der Gruppe -CH₂-CH₂-O-, -CH₂-CH(CH₃)-O-, -CH(CHa)-CH₂-O-, -CH₂-C(CH₃ₕ-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃}-O- und -CH(CH₃)-CH₂-O-, und besonders bevorzugt -CH₂-CH₂-O-worin Ph für Phenyl und Vin für Vinyl steht.

Zur Umsetzung des mindestens einen Polyisocyanats mit den Polyetheralkoholen verwendet man üblicherweise 60 bis 120, bevorzugt 80 bis 120, besonders bevorzugt 90 bis 110 und insbesondere 100 mol% an gegenüber Isocyanat reaktiven Gruppen in den Polyetheralkoholen pro mol Isocyanatgruppen in dem mindestens einen Polyisocyanat.

Zur Herstellung der als Emulgator wirksamen Komponenten (B) und (C) werden die Polyisocyanate und der Polyetheralkohol bei Temperaturen von 40 bis 180°C, vorzugsweise 50 bis 150°C, bevorzugt unter Einhaltung des genannten Molverhältnisses miteinander umgesetzt.

Die Reaktionsdauer beträgt in der Regel 10 min bis 5 Stunden, bevorzugt 15 min bis 4 Stunden, besonders bevorzugt 20 bis 180 min und ganz besonders bevorzugt 30 bis 150 min.

Zur Beschleunigung der Reaktion können gegebenenfalls geeignete Katalysatoren eingesetzt werden.

Hierbei handelt es sich um die üblichen für diese Zwecke bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink-(II)-stearat, Zink(II)-n-octanoat, Zink-(II)-2-ethyl- 1-hexanoat, Zink-(II)-naphthenat oder Zink-(II)-acetylacetonat, Zinnverbindungen, wie z. B. Zinn(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethy- lacetoacetat), Eisen-(III)-chlorid, Kaliumoctoat, Mangan-,Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der obengenannten Art. Ganz besonders bevorzugt ist die Verwendung von Zink-(II)-n-octanoat, Zink-(II)-2-ethyl-1-hexanoat und/oder Zink-(II)-stearat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.
Die Polyaddition zur Herstellung der erfindungsgemäßen Polyurethanzubereitung kann besonders bevorzugt in Anwesenheit von Cäsiumsalzen erfolgen, wie in der älteren deutschen Patentanmeldung mit dem Aktenzeichen 10161156.0 vom 12.12.2001 beschrieben. Bevorzugte Cäsiumsalze sind dabei Verbindungen, in denen folgende Anionen eingesetzt werden: F-, Cl-, ClO⁻, ClO₃⁻, ClO₄⁻, Br-, I⁻, IO₃⁻, CN-, OCN-, NO₂⁻, NO₃⁻, HCO₃⁻, CO₃²⁻, S²⁻, SH-, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻,S₂O₈²⁻, H₂PO₂-, H₂PO⁴⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)- sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂) auf, wobei n für die Zahlen 1 bis 20 steht.

Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente und/oder dem Polyetheralkohol vor Beginn der eigentlichen Umsetzung zuzumischen. Ebenso ist es möglich, den Katalysator dem Reaktionsgemisch zu einem beliebigen Zeitpunkt während der Reaktion oder im Sinne einer zweistufigen Reaktionsführung auch im Anschluß an die Urethanisierung, d. h. wenn der einem vollständigen Umsatz von Isocyanat und Hydroxylgruppen theoretisch entsprechende NCO-Gehalt erreicht ist, zuzusetzen.

Die Reihenfolge der Vermischung der Komponenten (A), (B) und (C) ist dabei erfindungsgemäß nicht wesentlich. Bei der Herstellung der erfindungsgemäßen Mischungen kann der Polyetheralkohol mit einem Teil der Komponente (A) umgesetzt und anschließend mit dem Rest der Komponenten (A) gemischt werden.
Die Herstellung kann aber auch so erfolgen, dass der Polyetheralkohol zur Gesamtmenge der Komponente (A) zugesetzt wird und dann die Umsetzung im selben Reaktionsgefäß durchgeführt wird.
Beispielsweise können die Komponenten auch gleichzeitig miteinander vermischt werden, (B) und (C) zumindest teilweise vorgelegt und (A) dazu hinzugegeben werden oder (A) zumindest teilweise vorgelegt, (B) und (C) hinzugegeben und die letzte Komponente hinzugegeben werden.

Der Verlauf der Umsetzung kann durch z. B. titrimetrische Bestimmung des NCO-Gehaltes verfolgt werden. Nach Erreichen des angestrebten NCO-Gehaltes wird die Reaktion abgebrochen. Dies kann bei rein thermischer Reaktionsführung beispielsweise durch Abkühlen des Reaktionsgemisches auf Raumtemperatur erfolgen. Bei der Verwendung eines Katalysators der genannten Art wird die Umsetzung im Allgemeinen aber durch Zugabe geeigneter Desaktivatoren abgestoppt. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, p-Toluolsulfonsäure, Benzoylchlorid, Dimethylsulfat und vorzugsweise Dibutylphosphat sowie Di-2-ethyl-hexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Die resultierenden Polyisocyanatgemische weisen in der Regel einen NCO-Gehalt von vorzugsweise 6,0 bis 23,0 Gew.-%, besonders bevorzugt 8,5 bis 22,0 Gew.-% auf.

Die resultierenden Polyisocyanatgemische weisen in der Regel eine Viskosität bei 23 °C von vorzugsweise 500 bis 8000 Pas, besonders bevorzugt 800 bis 4000 mPas auf.

Das Verfahren kann gegebenenfalls in einem geeigneten, gegenüber Isocyanatgruppen inerten Lösemittel (L) durchgeführt werden. Geeignete Lösemittel sind beispielsweise die an sich bekannten üblichen Lacklösemittel, wie z. B. Ethylacetat, Butylacetat, Ethylenglykolmonomethyl- oder-ethyletheracetat, 1-Methoxy-propyl-2-acetat, 3-Methoxy-n-butylacetat, Aceton, 2-Butanon, *iso*-Butylmethylketon, 4Methyl-2-pentanon, Cyclohexanon, Cyclo- pentanon, Toluol, Xylol, Chlorbenzol, Testbenzin, höher substituierte Aromaten, wie sie beispielsweise unter den Bezeich- nungen Solventnaphtha®, Solvesso®, Shellsol®, Isopar®, Nappar® und Diasol® im Handel sind, Propylenglykoldiacetat, Diethylen-glykoldimethylether, Dipropylenglykoldimethylether, Diethylenglykolethyl- und -butyletheracetat, N-Methylpyrrolidon und N-Methylcaprolactam, sowie bevorzugt Kohlensäureester oder Lactone, die in der EP-A1 697 424, S. 4, Z. 4 bis 32 genannt sind, besonders bevorzugt Dimethylcarbonat, Diethylcarbonat, 1,2-Ethylencarbonat und 1,2-Propylencarbonat, Lactone wie β-Propiolacton, y-Butyro-lacton, ε-Caprolacton und ε -Methylcaprolacton, aber auch beliebige Gemische solcher Lösemittel.

Es ist auch möglich, die Herstellung der erfindungsgemäßen Isocyanate zunächst ohne Lösemittel durchzuführen und das so erhältliche Produkt anschließend in einem Lösemittel (L) aufzunehmen.

Die Mischung enthält optional als Komponente (D) mindestens einen Emulgator, erhältlich durch Umsetzung eines Polyisocyanats mit mindestens einer Verbindung (d) mit mindestens einer hydrophilen, nicht gegenüber Isocyanat reaktiven Gruppe (Gruppe D1) und genau einer gegenüber Isocyanat reaktiven Gruppe (Gruppe D2).

Das mindestens eine in Komponente (D) verwendete Polyisocyanat kann mit dem mindestens einen Polyisocyanat (a) gleich oder verschieden sein. Bevorzugt ist das mindestens eine in Komponente (D) verwendete Polyisocyanat mit dem mindestens einen Polyisocyanat (a) gleich. Bei dem mindestens einen in Komponente (D) verwendeten Polyisocyanat kann es sich um jegweder Polyisocyanat handeln, bevorzugt handelt es sich um ein Polyisocyanat wie in Komponente (A) beschrieben. Besonders bevorzugt handelt es sich bei dem mindestens einen Polyisocyanat in der Kompomnente (D) um mindestens ein Polyisocyant (a1) und/oder mindestens ein Polyisocyanat (a2).

Mindestens eine Verbindung (d) bedeutet eine Mischung aus zwei oder mehr unterschiedlichen Verbindungen (d), bevorzugt ist eine Verbindung (d).

Die mindestens eine Verbindung (d) kann ein Monomer, Oligomer oder Polymer sein.

Die mindestens eine Verbindung (d) enthält genau eine gegenüber Isocyanat reaktive Gruppe (Gruppe D2).

Unter einer mit Isocyanat reaktiven Gruppe (Gruppe D2) ist im Rahmen dieser Erfindung eine Gruppe zu verstehen, die über mit NCO-Gruppen reaktive Wasserstoffatome verfügt oder die mit NCO-Gruppen unter den normalen Verfahrensbedingungen bei der Umsetzung eine Additionsverbindung eingehen kann. Diese Verfahrensbedingungen sind dem Fachmann an sich bekannt.

Beispielsweise ist diese Gruppe D2 eine Hydroxy-, Mercapto-, primäre oder sekundäre Aminogruppe (kurz NH-Gruppe), ein Epoxid, eine Säureanhydrid-, eine Monophosphorsäureether- oder eine Carbodiimidgruppe. Bevorzugt ist eine Hydroxy-, Mercapto- oder primäre oder sekundäre Aminogruppe (kurz NH-Gruppe). Besonders bevorzugt ist eine Hydroxygruppe.

Die mindestens eine Verbindung (d) enthält mindestens eine hydrophile, nicht gegenüber Isocyanat reaktive Gruppe (Gruppe D1).

Unter einer nicht gegenüber Isocyanat reaktiven Gruppe (Gruppe D1) ist im Rahmen dieser Erfindung eine Gruppe zu verstehen, die mit NCO-Gruppen unter den normalen Verfahrensbedingungen bei der Umsetzung keine Additionsverbindung eingehen kann. Diese Verfahrensbedingungen sind dem Fachmann an sich bekannt.

Bei der Gruppe D1 kann es sich zum Beispiel um eine ionische oder in eine ionische Gruppe überführbare Gruppe handeln.

Anionische bzw. in anionische Gruppen überführbare Gruppen sind zum Beispiel Carbonsäure- oder Sulfonsäuregruppen.
Kationische bzw. in kationische Gruppen überführbare Gruppen sind zum Beispiel quarternäre Ammoniumgruppen bzw. tertiäre Aminogruppen.

In ionische Gruppen überführbare Gruppen werden vorzugsweise vor oder während der Dispergierung der erfindungsgemäßen Mischung in Wasser in ionische Gruppen überführt.

Zur Überführung zum Beispiel von Carbonsäuregruppen oder Sulfonsäuregruppen in anionische Gruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung von tertiären Aminogruppe in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations und Quarternierungsmittel sind z.B. in der US-PS 3 479 310, Spalte 6, beschrieben.

Der Gehalt der ionischen Gruppen bzw. in ionische Gruppen überführbare Gruppen beträgt vorzugsweise 0,1 bis 3 mol pro kg der Summe der Komponenten (A), (B), (C) und (D).

Bei der Gruppe D1 kann es sich zum Beispiel um eine nichtionische, hydrophile Gruppe handeln.

Nichtionische Gruppen sind z.B. Polyalkylenethergruppen, insbesondere solche mit 5 bis 20 Alkylenoxideinheiten.

Bevorzugt sind Polyethylenethergruppen oder Polyalkylenethergruppen, die neben anderen Alkylenoxideinheiten, z.B. Propylenoxid, mindestens 7 Ethylenoxideinheiten enthalten.

Der Gehalt der hydrophilen nichtionischen Gruppen, insbesondere der Polyalkylenethergruppen beträgt vorzugsweise 1 bis 30 Gew.-%, besonders bevorzugt 5 bis 20 Gew.-%, bezogen auf die Summe der Komponenten (A), (B), (C) und (D).

Geeignet als mindestens eine Verbindung (d) sind zum Beispiel aliphatische, cycloaliphatische, araliphatische oder aromatische Hydroxy- bzw. Aminsulfonsäuren.

Bevorzugt handelt es sich bei der mindestens einen Verbindung (d) um Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-Cyclohexylaminopropansulfonsäure, N-Cyclohexylaminoethansulfonsäure sowie deren Alkali-, Erdalkali- oder Ammoniumsalze und besonders bevorzugt um die genannten Monohydroxysulfonsäuren sowie Monoaminosulfonsäuren.

Ebenfalls bevorzugt handelt es sich der mindestens einen Verbindung b2) um Polyalkylenetheralkohole, besonders bevorzugt um Polyethylenetheralkohole.

Die Polyalkylenetheralkohole und Polyethylenetheralkohole weisen bevorzugt ein Molekulargewicht Mₙ von mindestens 250, besonders bevorzugt mindestens 300 g/mol auf. Das Molekulargewicht Mₙ kann prinzipiell nach oben unbegrenzt sein, bevorzugt bis zu 5.000, besonders bevorzugt bis zu 2.000 g/mol, ganz besonders bevorzugt bis zu 1.000 g/mol und insbesondere bis zu 800 g/mol betragen.

Bevorzugte OH-Zahlen der Polyalkylenetheralkohole und Polyethylenetheralkohole, gemessen gemäß DIN 53240-2 (potentiometrisch), sind 40-350 mg KOH/g Festharz, bevorzugt 80-180 mg KOH/g Festharz.

Zur Herstellung der als Emulgator wirksamen Komponente (D) wird das mindestens eine Polyisocyanat umgesetzt mit mindestens einer Verbindung (d).

Die Herstellung der Komponente (D) ist zum Beispiel aus der DE-A-35 21 618, DE-A-40 01 783 und DE-A-42 03 51 O bekannt.

Bei der Herstellung kann die mindestens eine Verbindung (d) mit einem Teil der Komponente (A) umgesetzt und anschließend mit dem Rest der Komponente (A) gemischt werden.

Die Herstellung kann aber auch so erfolgen, dass die mindestens eine Verbindung (d) zur Gesamtmenge der Komponente (A) zugesetzt wird und dann die Umsetzung im selben Reaktionsgefäß durchgeführt wird.

Bevorzugte Komponenten b) sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Die erfindungsgemäßen Mischungen enthalten in lösungsmittelfreier Form bevorzugt
(A) 70 - 95 Gew%,
(B) 2.5 - 20 Gew%
(C) 2.5 - 20 Gew%
(D) 0 - 15 Gew%
wobei die Summe aus (A), (B), (C) und (D) 100 Gew% ergibt.

Die erfindungsgemäßen Mischungen enthalten in lösungsmittelfreier Form besonders bevorzugt
(a1) 30 - 70 Gew%,
(a2) 10 - 50 Gew%
(B) 2.5 - 20 Gew% und
(C) 2.5 - 20 Gew%
(D) 0 - 15 Gew%
wobei die Summe aus (a1), (a2), (B), (C) und (D) 100 Gew% ergibt.

Das Lösungsmittel (L) kann bezogen auf die Gesamtmischung in Mengen von 0 bis 60 Gew% anwesend sein, bevorzugt in Mengen von 0 bis 50 Gew%.

Die erfindungsgemäßen Mischungen können vorzugsweise in Wasser zur Herstellung wäßriger Dispersionen dispergiert werden, besonders bevorzugt werden die erfindungsgemäßen Mischungen in wäßrige Dispersionen eingemischt.

Die erfindungsgemäße Polyisocyanatzubereitung eignet sich zur Modifizierung von wäßrigen Beschichtungsmitteln (Lack, Schutzüberzüge) für z.B. Holz, Holzfurnier, Papier, Pappe, Karton, Textil, Leder, Vlies, Kunststoffoberflächen, Glas, Keramik, mineralische Baustoffe wie Zement-Formsteine und Faserzementplatten, Metalle oder beschichtete Metalle, Klebstoff oder Imprägnierungsmittel, z.B. zum Färben, auf Basis von wäßrigen Dispersionen oder Lösungen eines Feststoffgehaltes von 5 bis 40 Gew.%, vorzugsweise von 5 bis 20 Gew.%. Als Beschichtungsmittel kommen die an sich bekannten wäßrigen Dispersionen von Homo- und Copolymerisaten olefinisch ungesättigter Monomerer oder Polyurethanen oder auch Lösungen von Naturstoffen, wie z.B. von Casein, in Betracht.

Die erfindungsgemäßen Polyisocyanatzubereitungen werden den wäßrigen Beschichtungsmitteln im Allgemeinen in einer Menge von 1 bis 25, vorzugsweise von 2,5 bis 20 Gew-%, bezogen auf den Feststoffgehalt des Beschichtungsmittels, zugesetzt.

Sie werden in bekannter Weise durch z.B. Spritzen in einer Menge von 5 bis 50 g Feststoff/m² auf das Substrat aufgebracht.

Geeignete Dispersionen von Homo- oder Copolymerisaten olefinisch ungesättigter Monomerer sind z.B. an sich bekannte Dispersionen von Homo oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.% bezogen auf Gesamtmenge an olefinisch ungesättigten Monomeren, an anderen olefinisch ungesättigten Monomeren und/oder von Homo- oder Copolymerisaten von (Meth)acrylsäureestern von Alkoholen mit 1 bis 18, vorzugsweise 1 bis 4 Kohlenstoffatomen wie insbesondere (Meth)Acrylsäure-, -methyl-, -ethyl-, -propyl-, -hydroxyethyl- oder -hydroxypropylestern, gegebenenfalls zusammen mit bis zu 70 Gew.% an anderen olefinisch ungesättigten Monomeren und/ oder Butadien-Styrol-Copolymerisaten mit einem Gehalt an Butadien von ca. 20 bis 60 Gew-% und/oder von anderen Dien-Polymerisaten oder-Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew.%, insbesondere eines Chlorgehalts von ca. 36 Gew%.

Bevorzugt werden wäßrige Dispersionen von Copolymerisaten aus 90 bis 99,5 Gew% Acrylaten oder Methacrylaten von 1 bis 4 C-Atomen enthaltenden Alkanolen und 0,5 bis 10 Gew%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolyrnerisation herstellbar (s. Houben-Weyl, Methoden der organischen Chemie, 4. Auflage, Bd. E 20, S.217 ff.).

Geeignete wäßrige Polyurethandispersionen sind solche der an sich bekannten Art, wie sie z.B. in US-A 3 479 310, GB-A 1 076 688, US-A 4 108 814, US-A 4 092 286, DE-A 2 651 505, US-A 4 190 566, DE-A2 732 131 oder DE-A2 811 148 beschrieben sind.

Die eingesetzten wäßrigen Dispersionen können die üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalzen eingesetzt werden, wobei die Netzmittel im Allgemeinen in Mengen von 0,2 bis 0,6 Gew%, bezogen auf Füllstoff, zugesetzt werden.

Weitere geeignete Hilfsmittel sind z.B. in Mengen von 0,01 bis 1 Gew.%, bezogen auf die Dispersion, einzusetzende organische Verdickungsmittel wie z.B. Zellulose-Derivate, Alginate, Stärke oder Stärkederivate oder Polyacrylsäure oder in Mengen von 0,05 bis 5 Gew.%, bezogen auf die Dispersion, einzusetzende anorganische Verdickungsmittel wie z.B. Bentonite.

Auch Fungizide zur Konservierung können den Dispersionen zugesetzt werden. Diese kommen im Allgemeinen in Mengen von 0,02 bis 1 Gew.-%, bezogen auf die Dispersion, zum Einsatz. Geeignete Fungizide sind beispielsweise Phenol und Kresol-Derivate oder Zinnorganische Verbindungen.

Substrate für Imprägnierungen sind z.B. synthetische oder nichtsynthetische Fasern bzw. deren Gewebe oder Vliese.

Die erfindungsgemäßen Mischungen können sehr feinteilig in wäßrigen Dispersionen dispergiert werden. Darüber hinaus benötigt man weniger Zusatzmenge des wasseremulgierbaren Polyisocyanats um die gewünschten Eigenschaften der Dispersion einzustellen bzw. bei der Anwendung zu erreichen.

Die erfindungsgemäßen Mischungen können selbstverständlich mit üblichen Hilfs- und Zusatzmitteln der Lacktechnologie versetzt werden. Hierzu gehören beispielsweise Entschäumer, Verdicker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Zur Herstellung der Dispersionen reichen in den meisten Fällen einfache Emulgiertechniken, z.B. mit einem mechanischen Rührer, oder oftmals auch eine einfache Mischung der beiden Komponenten per Hand aus, um Dispersionen mit sehr guten Eigenschaften zu erzielen. Selbstverständlich können aber auch Mischtechniken mit höherer Scherenergie, wie z.B. Strahldispergierung, eingesetzt werden.

Die die erfindungsgemäßen Mischungen enthaltenden Beschichtungsmittel können insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die die erfindungsgemäßen Mischungen enthaltenden Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren appliziert werden.

Die Trocknung und Aushärtung der Beschichtungen erfolgt im Allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Die folgenden Beispiele sollen die Eigenschaften der Erfindung erläutern, ohne sie aber einzuschränken.

### Beispiele:

### Polyisocyanatherstellung

### Rohstoffe:

### Polyisocyanat a1:

HDI-Isocyanurat mit einem NCO-Gehalt von 22,2% und einer Viskosität von 2800 mPa*s bei 23°C (z.B. Basonat® Hl 100 der BASF SE).

### Polyisocyanat a2:

IPDI-Isocyanurat mit einem NCO-Gehalt von 17,3% (z.B. Vestanat T1890/100 der Evonik Industries).

### Polyetheralkohol 1:

Auf Methanol gestartetes und unter Kaliumhydroxidkatalyse hergestelltes, monofunktionelles Polyethylenoxid mit einer OH-Zahl von 112 (nach DIN 53240) und einem Molekulargewicht von 500 g/mol. Die noch anwesenden basischen Katalysatorreste wurden anschließend mit Essigsäure neutralisiert und das Produkt entsalzt. Hierbei wird auch gebildetes Kaliumacetat entfernt.

### Polyetheralkohol 2:

Auf Methanol gestartetes und unter Kaliumhydroxidkatalyse hergestelltes, monofunktionelles Polyethylenoxid mit einer OH-Zahl von 160 (nach DIN 53240) und einem Molekulargewicht von 350 g/mol. Die noch anwesenden basischen Katalysatorreste wurden anschließend mit Essigsäure neutralisiert und das Produkt entsalzt. Hierbei wird auch gebildetes Kaliumacetat entfernt.

### Vergleichs-polyisocyanat 1:

Es wurden 142,9g Polyisocyanat a2 (70%ig in 3-Methoxypropylacetat) und 15,0g Polyetheralkohol 1 unter Zusatz von 0,022g Zinkneodecanoat (50%ig in Butylacetate) als Katalysator umgesetzt. Nach 2 Stunden bei 90°C betrug der NCO-Gehalt 9,7%. Anschließend wurden 100,0g Polyisocyanat a1 und 15,0g Polyetheralkohol 1 zugesetzt. Nach 2 Stunden bei 90°C wurde die Reaktion unter Zusatz von 0,110g p-Toluolsulfonsäure (10%ig in Polyetheralkohol 1) gestoppt. Das entsprechende Produkt hat einen NCO-Gehalt von 12,8% und eine Viskosität von 4350 mPa.s bei 23°C.

### Vergleichs-polyisocyanat 2:

Es wurden 142,9g Polyisocyanat a2 (70%ig in 3-Methoxypropylacetat) und 15,0g Polyetheralkohol 2 unter Zusatz von 0,022g Zinkneodecanoat (50%ig in Butylacetate) als Katalysator umgesetzt. Nach 2 Stunden bei 90°C betrug der NCO-Gehalt 9,1%. Anschließend wurden 100,0g Polyisocyanat a1 und 15,0g Polyetheralkohol 2 zugesetzt. Nach 2 Stunden bei 90°C wurde die Reaktion unter Zusatz von 0,110g p-Toluolsulfonsäure (10%ig in Polyetheralkohol 1) gestoppt. Das entsprechende Produkt hat einen NCO-Gehalt von 12,9% und eine Viskosität von 4900 mPa.s bei 23°C.

### Erfindungsgemäßes Polyisocyanat 1:

Es wurden 143,2g Polyisocyanat a2 (70%ig in 3-Methoxypropylacetat) und 7,6g Polyetheralkohol 1 und 7,6g Polyetheralkohol 2 unter Zusatz von 0,022g Zinkneodecanoat (50%ig in Butylacetate) als Katalysator umgesetzt. Nach 2 Stunden bei 90°C betrug der NCO-Gehalt 9,6%. Anschließend wurden 100,0g Polyisocyanat a1, 7,6g Polyetheralkohol 1 und 7,6g P Polyetheralkohol 2 zugesetzt. Nach 2 Stunden bei 90°C wurde die Reaktion unter Zusatz von 0,110g p-Toluolsulfonsäure (10%ig in Polyetheralkohol 1) gestoppt. Das entsprechende Produkt hat einen NCO-Gehalt von 12,7% und eine Viskosität von 3750 mPa.s bei 23°C.

### Erfindungsgemäßes Polyisocyanat 2:

Es wurden 143,2g Polyisocyanat a2 (70%ig in 3-Methoxypropylacetat) und 7,6g Polyetheralkohol 1 und 7,6g Polyetheralkohol 2 unter Zusatz von 0,022g Zinkneodecanoat (50%ig in Butylacetate) als Katalysator umgesetzt. Nach 2 Stunden bei 90°C betrug der NCO-Gehalt 9,7%. Anschließend wurde 100,0g Polyisocyanat a1, 7,6g Polyetheralkohol 1 und 7,6g Polyetheralkohol 2 zugesetzt. Nach 2 Stunden bei 90°C wurde die Reaktion unter Zusatz von 0,110g p-Toluolsulfonsäure (10%ig in Polyetheralkohol 1) gestoppt. Das Reaktionsprodukt wurde, bei Zugabe von 3-Methoxypropylacetat bis zum einem Feststoffe Gehalt von 79,5% weiterverdünnt. Das entsprechende Produkt hat einen NCO-Gehalt von 12,1% und eine Viskosität von 1300 mPa.s bei 23°C.

### Vergleichs-polyisocyanat 3:

Es wurden 143,2g Polyisocyanat a2 (70%ig in 3-Methoxypropylacetat) und 3,8g Polyetheralkohol 1 und 11,4g Polyetheralkohol 2 unter Zusatz von 0,022g Zinkneodecanoat (50%ig in Butylacetate) als Katalysator umgesetzt. Nach 2 Stunden bei 90°C betrug der NCO-Gehalt 9,7%. Anschließend wurden 100,0g Polyisocyanat a1, 3,8g Polyetheralkohol 1 und 11,4g Polyetheralkohol 2 zugesetzt. Nach 2 Stunden bei 90°C wurde die Reaktion unter Zusatz von 0,110g p-Toluolsulfonsäure (10%ig in Polyetheralkohol 1) gestoppt. Das Reaktionsprodukt wurde, bei Zugabe von 3-Methoxypropylacetat bis zum einem Feststoffe Gehalt von 80,7% weiterverdünnt. Das entsprechende Produkt hat einen NCO-Gehalt von 11,8% und eine Viskosität von 1300 mPa.s bei 23°C.

### Vergleichs-polyisocyanat 4:

Es wurden 143,2g Polyisocyanat a2 (70%ig in 3-Methoxypropylacetat) und 11,4g Polyetheralkohol 1 und 3,8g Polyetheralkohol 2 unter Zusatz von 0,022g Zinkneodecanoat (50%ig in Butylacetate) als Katalysator umgesetzt. Nach 2 Stunden bei 90°C betrug der NCO-Gehalt 9,7%. Anschließend wurden 100,0g Polyisocyanat a1, 11,4g Polyetheralkohol 1 und 3,8g Polyetheralkohol 2 zugesetzt. Nach 2 Stunden bei 90°C wurde die Reaktion unter Zusatz von 0,110g p-Toluolsulfonsäure (10%ig in Polyetheralkohol 1) gestoppt. Das Reaktionsprodukt wurde, bei Zugabe von 3-Methoxypropylacetat bis zum einem Feststoffe Gehalt von 80,3% weiterverdünnt. Das entsprechende Produkt hat einen NCO-Gehalt von 12,1% und eine Viskosität von 1450 mPa.s bei 23°C.

### Anwendungstechnische Ergebnisse:

### Formulierung

### Vergleich 1 - Vergleich 2 - Beispiel1

Lackomponente I : 400,0 g Liocryl AM 920 (acrylatbasiertes wäßriges Polyol Fa. Synthopol, OH-Zahl 60 mg KOH/g, 40%ig in Wasser) wurde bei Raumtemperatur durch Zugabe von Dimethylethanolamine/Wasser (Mischung 1/1) unter Rühren (600 UPM) auf einen pH-Wert von 8.1 eingestellt und dann mit 16,0 g Butyldiglycol und 16,0 g Solvesso als Filmbildehilfsmittel versetzt. Schließlich wurde 1,2 g Hydropalat® WE3240 (Fa. BASF SE) als Benetzungsadditiv zugegeben und mit VE-Wasser der Feststoffgehalt auf 35,0 Gew % eingestellt.

Die verschiedenen Polyisocyanate wurden zu der Dispersion (Lackkomponente I) zugegeben und für 30s per Hand mit einem Holzspatel eingearbeitet. Schließlich wurde die Viskosität mit VE-Wasser auf 30 sec DIN Becher 4 eingestellt

### Vergleich 3 - Vergleich 4- Beispiel 2

Lackkomponente II: 200,0 g Joncryl 8312 (acrylatbasiertes wäßriges Polyol Fa. BASF, OH-Zahl 100 mg KOH/g, 45%ig in Wasser) wurde bei Raumtemperatur durch Zugabe von Dimethylethanolamine/Wasser (Mischung 1/1) unter Rühren (600 UPM) auf einen pH-Wert von 8.1 eingestellt und dann mit 5,0 g Butyldiglycolacetate und 14,0 g Butylglycolacetate als Filmbildehilfsmittel versetzt. Schließlich wurde 1,2 g Hydropalat® WE3240 (Fa. BASF SE) als Benetzungadditiv zugegeben und mit VE-Wasser der Feststoffgehalt auf 38,0 Gew % eingestellt.
Die verschiedenen Polyisocyanate wurden zu der Dispersion (Lackkomponente II) zugegeben und für 30s per Hand mit einem Holzspatel eingearbeitet. Schließlich wurde die Viskosität mit VE-Wasser auf 30 sec mit DIN Becher 4 eingestellt.

Unmittelbar nach ihrer Herstellung wurden die erhaltenen Formulierungen bzw. Vergleichsformulierungen mit einem 200 µm Rakel auf ein vorlackiertes weißes Aluminiumblech (30 x 10 cm) aufgezogen und 15 Minuten unter Normbedingungen (23 °C, relative Luftfeuchtigkeit 50 %) gelagert. Daran anschließend wurden die erhaltenen beschichteten Aluminiumbleche in einem Trockenschrank für 30 Minuten bei 60 °C getrocknet. Nach dem Abkühlen wurden Glanz und Trübung (Haze) der erhaltenen Lacke gemäß DIN 2813 und DIN 13803 bestimmt. Insgesamt wurden jeweils 5 Messungen an unterschiedlichen Stellen der beschichteten Aluminiumbleche durchgeführt. Die dabei erhaltenen Mittelwerte sind in nachfolgender Tabellen aufgelistet. Dabei sind die Glanzwerte umso besser zu bewerten je höher der jeweilige Wert ist, wohingegen die entsprechenden Trübungswerte (Haze) umso besser zu bewerten sind je niedriger der jeweilige Wert ist.

### Anwendungstechnische Prüfungen Ergebnisses:

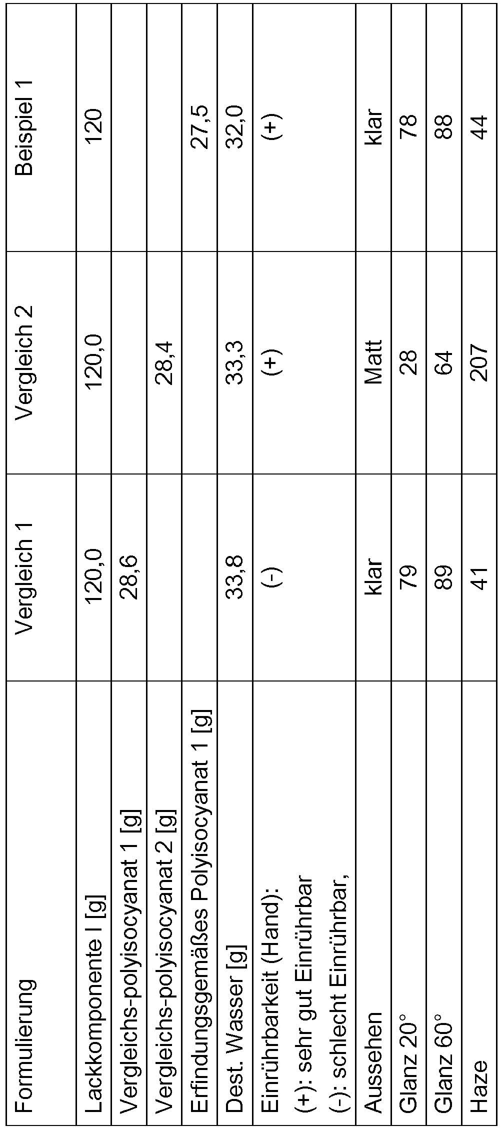

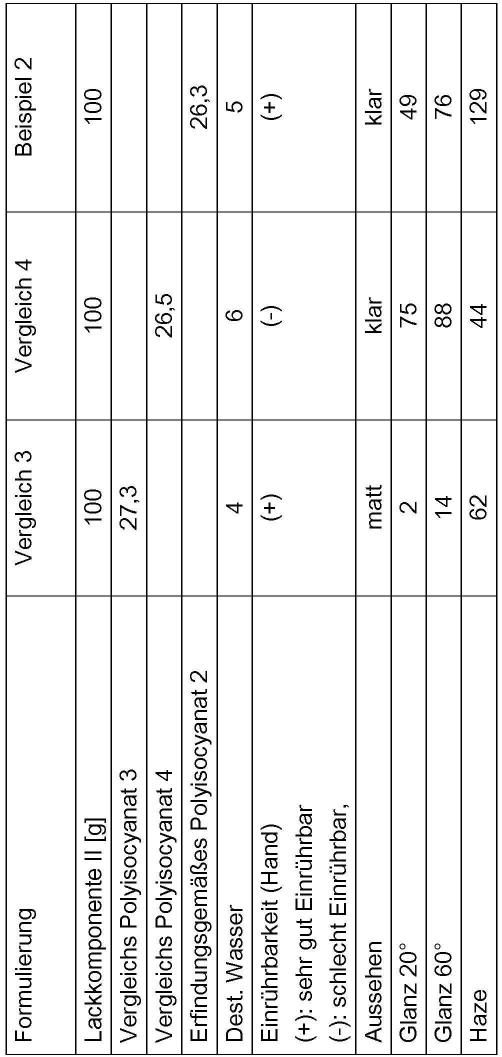

## Patentansprüche

1. Mischungen, enthaltend
(A) mindestens ein Polyisocyanat (a),
(B) mindestens einen Emugator, erhältlich durch Umsetzung mindestens eines Polyisocyanats mit mindestens einem Polyetheralkohol, wobei der Polyetheralkohol ein Molekulargewicht kleiner 400 g/mol aufweist,
(C) mindestens einen Emugator, erhältlich durch Umsetzung mindestens eines Polyisocyanats mit mindestens einem Polyetheralkohol, wobei der Polyetheralkohol ein Molekulargewicht größer 450 g/mol aufweist, und
(D) optional mindestens einen Emulgator, erhältlich durch Umsetzung eines Polyisocyanats mit mindestens einer Verbindung (d) mit mindestens einer hydrophilen, nicht gegenüber Isocyanat reaktiven Gruppe (Gruppe D1) und genau einer gegenüber Isocyanat reaktiven Gruppe (Gruppe D2),
wobei das Gewichtsverhältnis von Komponente (B) zu Komponente (C) von 30:70 bis 70:30, bevorzugt von 40:60 bis 60:40 beträgt.

2. Mischungen gemäß Anspruch 1, **dadurch gekennzeichnet dass** es sich bei dem mindestens einen Polyisocyanat (a) um mindestens ein Polyisocyanat (a1) und mindestens ein Polyisocanat (a2) handelt, wobei das mindestens eine Polyisocyanat (a1) ein Isocyanurat und/oder Biuret des 1,6-Diisocyanatohexans (HDI) ist und das mindestens eine Polyisocyanat (a2) ein Isocyanurat des 1-lsocyanato-3,5,5-tri-methyl-5-isocyanatomethyl-cyclohexan (IPDI) ist.

3. Mischungen gemäß Anspruch 1, enthaltend in lösungsmittelfreier
Form
70 - 95 Gew% von Komponente (A),
2.5 - 20 Gew% von Komponente (B)
2.5 - 20 Gew% von Komponente (C) und
0 - 15 Gew% von Komponente (D)
wobei die Summe aus (A), (B), (C) und (D) 100 Gew% ergibt.

4. Mischungen gemäß Anspruch 2, enthaltend in lösungsmittelfreier
Form
30 - 70 Gew% von Polyisocyanat (a1),
10 - 50 Gew% von Polyisocyanat (a2),
2.5 - 20 Gew% von Komponente (B)
2.5 - 20 Gew% von Komponente (C) und
0 - 15 Gew% von Komponente (D)
wobei die Summe aus (a1), (a2), (B), (C) und (D) 100 Gew% ergibt.

5. Mischungen gemäß einem der vorstehenden Ansprüche, **dadurch gekennzeichnet dass** es sich bei dem Polyisocyanat in Komponente (B) und/oder Komponente (C) um ein Isocyanurat und/oder Biuret des 1,6-Hexamethylendiisocyanats (HDI) und/oder um ein Isocyanurat des 1-Isocyanato-3,5,5-trimethyl-5-iso-cyanatomethyl-cyclohexan (IPDI) handelt.

6. Mischungen gemäß einem der vorstehenden Ansprüche, in denen der Polyetheralkohol in Komponente (B) und/oder Komponente (C) erhältlich ist durch Umsetzung mindestens eines gesättigten aliphatischen Alkohols mit 1 bis 4 Kohlenstoffatomen im Alkylrest mit Ethylenoxid, Propylenoxid oder deren Gemischen.

7. Mischungen gemäß einem der vorstehenden Ansprüche, in denen der Polyetheralkohol in Komponente (B) und/oder Komponente (C) erhältlich ist durch Umsetzung von Methanol mit Ethylenoxid.

8. Mischungen gemäß einem der vorstehenden Ansprüche, **dadurch gekennzeichnet dass** der Polyetheralkohol in Komponente (B) ein Molekulargewicht von 200 g/mol bis 400 g/mol aufweist.

9. Mischungen gemäß einem der vorstehenden Ansprüche, **dadurch gekennzeichnet dass** der Polyetheralkohol in Komponente (C) ein Molekulargewicht von 450 g/mol bis 650 g/mol aufweist.

10. Polymerdispersion, enthaltend eine Mischung gemäß einem der vorstehenden Ansprüche.

11. Beschichtungsmasse, enthaltend eine Mischung gemäß einem der Ansprüche 1 bis 9 oder eine Polymerdispersion gemäß Anspruch 10.

12. Verfahren zur Beschichtung von Substraten, **dadurch gekennzeichnet, dass** man eine Mischung gemäß einem der Ansprüche 1 bis 9 als Beschichtungsmittel einsetzt.

13. Verwendung einer Mischung gemäß einem der Ansprüche 1 bis 9 als Beschichtungsmittel für Holz, Holzfurnier, Papier, Pappe, Karton, Textil, Leder, Vlies, Kunststoffoberflächen, Glas, Keramik, mineralische Baustoffe, Metalle oder beschichtete Metalle.

## Claims

1. A mixture comprising
(A) at least one polyisocyanate (a),
(B) at least one emulsifier obtainable by reacting at least one polyisocyanate with at least one polyether alcohol, the polyether alcohol having a molecular weight of less than 400 g/mol,
(C) at least one emulsifier obtainable by reacting at least one polyisocyanate with at least one polyether alcohol, the polyether alcohol having a molecular weight of greater than 450 g/mol, and
(D) optionally at least one emulsifier obtainable by reacting a polyisocyanate with at least one compound (d) having at least one hydrophilic, non-isocyanate-reactive group (group D1) and precisely one isocyanate-reactive group (group D2),
where the weight ratio of component (B) to component (C) is from 30:70 to 70:30, preferably from 40:60 to 60:40.

2. The mixture according to claim 1, wherein the at least one polyisocyanate (a) comprises at least one polyisocyanate (a1) and at least one polyisocyanate (a2), the at least one polyisocyanate (a1) being an isocyanurate and/or biuret of 1,6-diisocyanatohexane (HDI) and the at least one polyisocyanate (a2) being an isocyanurate of 1-isocyanato-3,5,5-trimethyl-5-isocyanatomethylcyclohexane (IPDI).

3. The mixture according to claim 1, comprising in solvent-free form
70 - 95% by weight of component (A),
2.5 - 20% by weight of component (B),
2.5 - 20% by weight of component (C) and
0 - 15% by weight of component (D),
where the sum of (A), (B), (C) and (D) makes 100% by weight.

4. The mixture according to claim 2, comprising in solvent-free form
30 - 70% by weight of polyisocyanate (a1),
10 - 50% by weight of polyisocyanate (a2),
2.5 - 20% by weight of component (B),
2.5 - 20% by weight of component (C) and
0 - 15% by weight of component (D),
where the sum of (a1), (a2), (B), (C) and (D) makes 100% by weight.

5. The mixture according to any of the preceding claims, wherein the polyisocyanate in component (B) and/or component (C) comprises an isocyanurate and/or biuret of 1,6-hexamethylenediisocyanate (HDI) and/or comprises an isocyanurate of 1-isocyanato-3,5,5-trimethyl-5-isocyanatomethylcyclohexane (IPDI).

6. The mixture according to any of the preceding claims, in which the polyether alcohol in component (B) and/or component (C) is obtainable by reacting at least one saturated aliphatic alcohol having 1 to 4 carbon atoms in the alkyl radical with ethylene oxide, propylene oxide or mixtures thereof.

7. The mixture according to any of the preceding claims, in which the polyether alcohol in component (B) and/or component (C) is obtainable by reacting methanol with ethylene oxide.

8. The mixture according to any of the preceding claims, wherein the polyether alcohol in component (B) has a molecular weight of 200 g/mol to 400 g/mol.

9. The mixture according to any of the preceding claims, wherein the polyether alcohol in component (C) has a molecular weight of 450 g/mol to 650 g/mol.

10. A polymer dispersion comprising a mixture according to any of the preceding claims.

11. A coating material comprising a mixture according to any of claims 1 to 9 or a polymer dispersion according to claim 10.

12. A process for coating substrates, wherein a mixture according to any of claims 1 to 9 is used as coating composition.

13. The use of a mixture according to any of claims 1 to 9 as a coating composition for wood, wood veneer, paper, paperboard, cardboard, textile, leather, nonwoven, plastics surfaces, glass, ceramic, mineral building materials, metals, or coated metals.

## Revendications

1. Mélanges, contenant
(A) au moins un polyisocyanate (a),
(B) au moins un émulsifiant, qui peut être obtenu par transformation d'au moins un polyisocyanate avec au moins un polyétheralcool, le polyétheralcool présentant un poids moléculaire inférieur à 400 g/mole,
(C) au moins un émulsifiant, qui peut être obtenu par transformation d'au moins un polyisocyanate avec au moins un polyétheralcool, le polyétheralcool présentant un poids moléculaire supérieur à 450 g/mole, et
(D) éventuellement au moins un émulsifiant, qui peut être obtenu par transformation d'un polyisocyanate avec au moins un composé (d) comportant au moins un groupe hydrophile non réactif envers isocyanate (groupe D1) et exactement un groupe réactif envers isocyanate (groupe D2),
le rapport en poids du composant (B) sur le composant (C) étant de 30 : 70 à 70 : 30, préférablement de 40 : 60 à 60 : 40.

2. Mélanges selon la revendication 1, **caractérisés en ce que** l'au moins un polyisocyanate (a) est au moins un polyisocyanate (a1) et au moins un polyisocyanate (a2), l'au moins un polyisocyanate (a1) étant un isocyanurate et/ou biuret du 1,6-diisocyanatohexane (HDI) et l'au moins un polyisocyanate (a2) étant un isocyanurate du 1-isocyanato-3,5,5-tri-méthyl-5-isocyanatométhyl-cyclohexane (IPDI).

3. Mélanges selon la revendication 1, contenant sous forme exempte de solvant
70 à 95 % en poids de composant (A),
2,5 à 20 % en poids de composant (B)
2,5 à 20 % en poids de composant (C) et
0 à 15 % en poids de composant (D)
la somme de (A), (B), (C) et (D) donnant 100 % en poids.

4. Mélanges selon la revendication 2, contenant sous forme exempte de solvant
30 à 70 % en poids de polyisocyanate (a1),
10 à 50 % en poids de polyisocyanate (a2),
2,5 à 20 % en poids de composant (B)
2,5 à 20 % en poids de composant (C) et
0 à 15 % en poids de composant (D)
la somme de (a1), (a2), (B), (C) et (D) donnant 100 % en poids.

5. Mélanges selon l'une quelconque des revendications précédentes, **caractérisés en ce que** le polyisocyanate dans le composant (B) et/ou le composant (C) est un isocyanurate et/ou biuret du 1,6-diisocyanate d'hexaméthylène (HDI) et/ou est un isocyanurate du 1-isocyanato-3,5,5-tri-méthyl-5-isocyanatométhyl-cyclohexane (IPDI).

6. Mélanges selon l'une quelconque des revendications précédentes, dans lesquels le polyétheralcool dans le composant (B) et/ou le composant (C) peut être obtenu par transformation d'au moins un alcool aliphatique saturé comportant 1 à 4 atomes de carbone dans le radical alkyle avec de l'oxyde d'éthylène, de l'oxyde de propylène ou leurs mélanges.

7. Mélanges selon l'une quelconque des revendications précédentes, dans lesquels le polyétheralcool dans le composant (B) et/ou le composant (C) peut être obtenu par transformation de méthanol avec de l'oxyde d'éthylène.

8. Mélanges selon l'une quelconque des revendications précédentes, **caractérisés en ce que** le polyétheralcool dans le composant (B) présente un poids moléculaire de 200 g/mole à 400 g/mole.

9. Mélanges selon l'une quelconque des revendications précédentes, **caractérisés en ce que** le polyétheralcool dans le composant (C) présente un poids moléculaire de 450 g/mole à 650 g/mole.

10. Dispersion de polymère, contenant un mélange selon l'une quelconque des revendications précédentes.

11. Masse de revêtement, contenant un mélange selon l'une quelconque des revendications 1 à 9 ou une dispersion de polymère selon la revendication 10.

12. Procédé pour le revêtement de substrats, **caractérisé en ce qu'**on utilise un mélange selon l'une quelconque des revendications 1 à 9 en tant qu'agent de revêtement.

13. Utilisation d'un mélange selon l'une quelconque des revendications 1 à 9 en tant qu'agent de revêtement pour du bois, un placage de bois, du papier, du cartonnage, du carton, du textile, du cuir, un non- tissé, des surfaces de plastique, du verre, de la céramique, des matériaux de construction minéraux, des métaux ou des métaux revêtus.
